# EUROPÄISCHE PATENTSCHRIFT

(11) **EP 0 794 362 B1**
(45) Veröffentlichungstag und Bekanntmachung des Hinweises auf die Patenterteilung: **19.09.2001**
(21) Anmeldenummer: 97103077.0
(22) Anmeldetag: 26.02.1997
(51) Int. Cl.: F16H 59/04, F16H 59/02, F16H 61/24

(54) **Schaltvorrichtung für ein Getriebe von Kraftfahrzeugen**
Gear selector for a transmission
Mécanisme de sélection de rapport pour une transmission

(30) Priorität: 08.03.1996 DE 19608981
(43) Veröffentlichungstag der Anmeldung: 10.09.1997
(73) Patentinhaber: ZF Lemförder Metallwaren AG, 49448 Lemförde (DE)
(72) Erfinder: Ersoy, Metin, Dr.-Ing., 65396 Walluf (DE)

(56) Entgegenhaltungen:
- EP-A- 0 731 293
- WO-A-91/10084
- WO-A-95/33938
- DE-A- 3 807 881
- DE-A- 4 108 388
- DE-A- 4 428 205
- DE-A- 19 621 781

## Beschreibung

Die Erfindung betrifft eine Schaltvorrichtung für ein Getriebe von Kraftfahrzeugen.

Derartige Schaltvorrichtungen werden heute vorzugsweise zur berührungslosen Erfassung von Schaltsignalen, die den Schaltbewegungen eines Schalthebels entsprechen, genutzt. Somit entfallen aufwendige mechanische Übertragungselemente, die ausgehend von der Schaltvorrichtung bis zum Getriebe des Kraftfahrzeuges verlegt werden müssen.

Aus DE 38 07 881 A1 ist es beispielsweise bekannt, die Wählstellungen des Wählhebels durch Sensoren zu erfassen, die ihrerseits elektrische Signale an ein Steuergerät des Getriebes weitergeben. Die in der Schrift dargestellte Schaltvorrichtung weist zwei Schaltgassen auf, von denen die eine für den Automatikbetrieb und die andere für einen wahlweise nutzbaren manuellen, schrittweisen Schaltbetrieb vorgesehen ist. In der "manuellen Schaltgasse" erfaßt je ein Sensor die Hoch- bzw. die Rückschaltung um einen Gang, die durch Tippen des Wählhebels in Fahrtrichtung bzw. entgegen der Fahrtrichtung im Getriebe veranlaßt wird. Der Wechsel von der einen zur anderen Schaltgasse wird ebenfalls durch einen Sensor erfaßt. Dazu wird beim Verschwenken des Wählhebels ein Betätigungshebel mitgenommen, der über eine an ihm angelenkte Betätigungsstange in das Getriebe eingreift und die dort befindlichen Sensoren für die entsprechenden Wählstellungen betätigt. Die Verarbeitung der Sensorsignale erfolgt dabei in an sich bekannter Weise über eine zentrale Verarbeitungseinheit, die mit der Steuereinheit des Getriebes zusammenwirkt.

Eine derartige Lösung ist sehr kostenintensiv, da zahlreiche Bauteile benötigt werden. So muß für jede Schaltstellung des Wählhebels wenigstens ein Sensor vorgesehen werden, ferner wenigstens ein Sensor für das Verschwenken des Wählhebels von der einen zu der anderen Schaltgasse und darüber hinaus noch einmal zwei Sensoren für die schrittweise Erfassung der Schaltstellungen in der "manuellen Schaltgasse". Die Vielzahl an erforderlichen Bauteilen vergrößert das Risiko von Ausfallerscheinungen erheblich, sodaß eine derartige Ausführung störanfällig und darüber hinaus teuer ist.

Aus der EP 0 731 293 A1, die als Nächsliegenden Stand der Technik im Sinne des Artikels 54(3) EPÜ für die benannten Vertrogsstaaten ES, FR, GB, IT angusehen ist, ist es darüber hinaus bekannt, den Schalthebel mit einer Steuerfahne zu koppeln, die mit Sensoren bestückt ist, sodaß die Schaltstellungen des Schalthebels berührungslos sensierbar sind. Die Signale der Schalthebelbewegung werden an eine Steuereinheit des Kraftfahrzeuggetriebes übergeben. Bei der in dieser Schrift beschriebenen Lösung greift der Schalthebel in die Steuerfahne ein und nimmt diese bei seiner Bewegung mit. Der Schalthebel ist kreuzstückartig gelagert und schwenkbar im Gehäuse der Schaltvorrichtung aufgenommen. Infolge der ungünstigen Hebelverhältnisse sowie der zur Schwingungsisolierung erforderlichen "weichen" Lagerung des Kreuzstückes leidet die Schaltqualität insofern erheblich, als sich ein Bewegungsspiel einstellt. Dies wird vom Fahrer als unangenehm empfunden und führt beim Schalten zu einer Verunsicherung. Daneben bewirkt das Bewegungsspiel am Schalthebel auch, daß die Schaltstellungen nur eindeutig voneinander getrennt werden können, wenn die Sensoren einen hinreichend großen Abstand voneinander aufweisen. Um einen Überdeckungsbereich zwischen den Sensoren zu vermeiden muß die Schaltvorrichtung insgesamt recht groß ausgeführt werden.
Ansonsten bestünde die Notwendigkeit, eine zusätzliche Auswerteschaltung vorzusehen, die oberhalb oder unterhalb eines vordefinierten Schwellwertes ein Schaltsignal erzeugt bzw. die Schaltstellung als nicht angewählt definiert. Im letzteren Fall kann ein Überdeckungsbereich zwischen den Sensoren akzeptiert werden.

Aufgabe der Erfindung ist es, eine Schaltvorrichtung zu entwickeln, bei der neben der berührungslosen Abtastung der Signale zur Erfassung der Schaltbewegungen des Schalthebels, die Anzahl der notwendigen Bauteile minimiert wird und die eine zuverlässige Führung des Schalthebels gewährleistet.

Eine erfindungsgemäße Schaltvorrichtung löst diese Aufgabenstellung mit den Merkmalen des Patentanspruches 1. Ausgestaltungen der Erfindung sind Gegenstand der Unteransprüche.

Eine derartige Schaltvorrichtung kann für unterschiedliche Getriebeschaltungen verwendet werden, so beispielsweise für Automatikschaltungen mit einer oder mit mehreren Schaltgassen, für Schaltungen mit schrittweisem manuellem Schaltbetrieb, bei denen das Herauf- oder Herunterschalten des Getriebes durch kurzzeitiges Antippen des Schalthebels in der entsprechenden Richtung erfolgt, oder gegebenenfalls sogar für rein manuelle Schaltungen.

Nach der vorgeschlagenen Lösung ist ein Wähl- oder Schalthebel während des Schaltvorganges mit einer Steuerfahne gekoppelt. Die Meßwertaufnehmer (Sensoren) erfassen dabei ein von der Steuerfahne widergegebenes Signal und geben dieses nach entsprechender Signalverarbeitung an das Steuerungssystem des Getriebes weiter. Signalverarbeitung und Steuerungssystem des Getriebes können dabei in einer zentralen Verarbeitungseinheit (CPU) vorgesehen werden. Der Schalthebel ist unterhalb seiner Lagerung mit einem zapfenartigen Übergangsbereich und einem sich daran anschließenden Stift ausgestattet, der den Schalthebel sicher und zuverlässig in einer den Schaltstellungen entsprechenden Führungskontur eines als Gleitstein bezeichneten Bauelementes führt.

Gemäß einer Ausgestaltung der Erfindung ist vorgesehen, daß bis zu sechs Schaltstellungen von wenigstens drei Sensoren sensiert werden.

Erfindungsgemäß können optische Sensoren Verwendung finden, wobei ein optisches Signal von Reflektionsflächen auf der Steuerfahne reflektiert und von den Sensoren erfaßt wird. Es sind auch Bauteile verwendbar, die sowohl als Meßwertaufnehmer fungieren, als auch das zu erfassende Signal zuvor selber aussenden.

Die Steuerfahne kann beispielsweise auch mit magnetisierten Bereichen versehen werden, deren Bewegung in den Sensoren (Hallsensoren) unter Ausnutzung des Hall-Effektes eine Spannung induzieren, die wiederum zur Weiterverarbeitung nutzbar ist.

In einem Schaltgehäuse wird ein Schalthebel vorzugsweise so gelagert, daß er sich längs und quer zur Fahrtrichtung bewegen läßt. Der zapfenartige Übergangsbereich des Schalthebels, der sich unterhalb der Lagerachsen befindet, an dem seinerseits ein Stift angeformt ist, der in die Steuerfahne eingreift, wird in dem Gleitstein zwangsgeführt, der eine Führungskontur aufweist, die dem Schaltbild der Schaltvorrichtung entspricht. Die Schalthebelbewegung führt die Steuerfahne in den Wirkungsbereich der Sensoren.
Die Lagerung des Schalthebels kann vorteilhaft in einem Kreuzstück, auf zwei orthogonalen Achsen erfolgen. Es sind dies die Wähl- beziehungsweise die Schaltachse. Das Kreuzstück weist dabei unterhalb der Lagerstelle des Schalthebels einen bügelförmigen Bereich auf, in den wenigstens einseitig eine definiert profilierte Oberfläche eingearbeitet ist. Mit dieser profilierten Oberfläche wirken federbelastete Rastmittel, die am Schalthebel befestigt sind, zusammen. Dabei können die Rastmittel aus federbelasteten Walzen oder Kugeln bestehen. Es liegen jedoch auch einfache Kunststoffgleitelemente im Bereich des Erfindungsgedankens.
Bei einer erfindungsgemäßen Schaltvorrichtung können selbstverständlich mehrere Schaltgassen vorgesehen werden. Der bügelförmige Bereich des Kreuzstückes wird dann entsprechend der Zahl der Schaltstufen ausgerührt. Das Rastmittel ermöglicht bei einer derartigen Ausführung die stufenweise Anwahl dieser Schaltstufen, indem die federbelasteten Walzen oder Kugeln in komplementäre Ausnehmungen des bügelförmigen Bereiches des Kreuzstückes eingreifen.

Jede Schaltstellung des Schalthebels wird von Sensoren der eingangs beschriebenen Art erfaßt. Gemäß der vorgestellten Lösung ist jeder Schaltstellung eine einer Binärmatrix entsprechende Codierung zugeordnet. Auf der Steuerfahne sind bei Verwendung optischer Sensoren Reflektionsflächen vorgesehen, die die zugeführten Signale an die Sensoren weiterleiten. Die freien Bereiche auf der Steuerfahne ergeben somit jeweils ein "0-Signal", die Reflektionsflächen ein "1-Signal". Diese binären Signale der Sensoren werden über die CPU an das Steuerungssystem des Getriebes weitergeleitet, wo sie den entsprechenden Schaltvorgang auslösen. Durch diese Codierung sind deutlich weniger Sensoren notwendig, als es bei bisher bekannten Ausführungen der Fall ist.

Bei Schaltvorrichtungen mit schrittweisem Schalten (Tippen) in Längs- oder Querrichtung, für die die vorgestellte Lösung besonders vorteilhaft ist, sorgen die federbelasteten Rastmittel und die Gestaltung der profilierten Oberflächen dafür, daß der Schalthebel nach erfolgtem Schaltvorgang wieder seine Neutralstellung einnimmt.
Da die von der Steuerfahne reflektierten Signale von den Sensoren berührungslos abgenommen und anschließend an das Steuerungssystem weitergegeben werden, fehlt dem Fahrzeugführer naturgemäß das "Schaltgefühl", denn eine mechanische Verbindung zwischen Schalthebel und Getriebe ist bei der vorgeschlagenen Schaltvorrichtung nicht vorhanden.
Um dem Fahrzeugführer zumindest dieses gewohnte "Schaltgefühl" zu vermitteln, wird eine erfindungsgemäße Schaltvorrichtung mit der definiert profilierten Oberfläche in dem bügelförmigen Bereich des Kreuzstückes versehen. Diese besteht im Falle einer Schaltvorrichtung für ausschließlich schrittweises Schalten (Tippen) aus einem Wellenprofil mit nur einer Senke, die jeweils in Richtung der Schaltbewegungen ansteigt. Mit einer derartig profilierten Oberfläche wirken die am Schalthebel vorgesehenen federbelasteten Rastmittel zusammen und ermöglichen es somit, entsprechend der Wahl der Feder beziehungsweise des Anstieges, jede erwünschte Schaltkraftstärke zu simulieren.

Für den Rückwärtsgang kann zusätzlich eine Raststufe, in die der Schalthebel nach Überwindung der Rückwärtsgangsperre einrastet, vorhanden sein.
Die Gestaltung der Abdeckung der Schaltvorrichtung mit der darin vorgesehenen Schalthebeldurchführung, durch die der Schalthebel geführt ist, ist bei einer erfindungsgemäßen Ausführung sehr einfach gehalten, da lediglich eine Durchführung, beispielsweise eine Bohrung, nötig ist. Diese Öffnung wird mit einem elastischen Dichtungsbalg versehen, so daß die komplette Schaltung hermetisch gegen Staub, Flüssigkeiten und ähnliches abgedichtet ist.
Es entfallen die Schaltkulissen mit den bekannten Abdichtungsproblematiken zum Fahrgastraum. Die Schaltvorrichtung stellt eine einfache und kostengünstige Realisierung einer Joystick-Schaltung dar.

In der Zeichnung ist ein bevorzugtes Ausführungsbeispiel des Erfindungsgegenstandes gezeigt und wird nachfolgend beschrieben.
Es zeigen:
- **Figur 1:**: Eine Schnittdarstellung einer erfindungsgemäßen Schaltvorrichtung in Fahrzeuglängsrichtung gesehen
- **Figur 2:**: Eine Schnittdarstellung einer erfindungsgemäßen Schaltvorrichtung in Fahrzeugquerrichtung gesehen
- **Figur 3:**: Die Darstellung des Schaltschemas einer erfindungsgemäßen Schaltvorrichtung
- **Figur 4:**: Die Darstellung einer erfindungsgemäßen Schaltvorrichtung im Schnitt, in Höhe des Gleitsteines mit darunter liegender Steuerfahne
- **Figur 5:**: Eine erfindungsgemäße Steuerfahne
- **Figur 6:**: Die schematische Darstellung der Leiterplatte einer erfindungsgemäßen Schaltvorrichtung mit den darunter angebrachten Sensoren
- **Figur 7:**: Eine Binärmatrix zur Codierung von 6 Schaltstellungen.

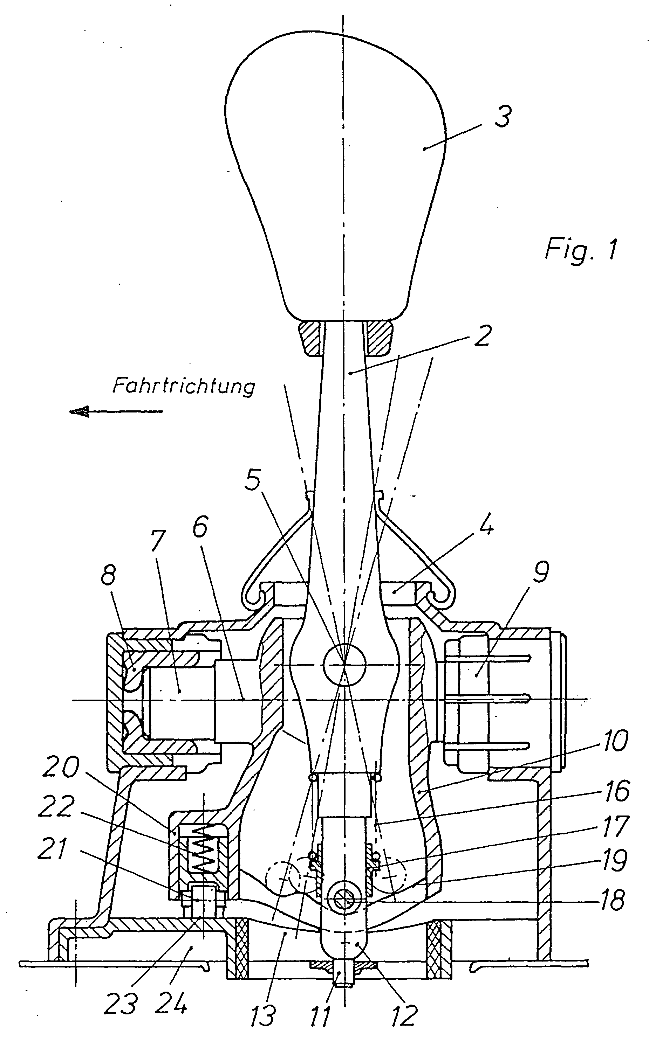

In Figur 1 ist eine Schnittdarstellung einer erfindungsgemäßen Schaltvorrichtung in Fahrzeuglängsrichtung gesehen dargestellt. Die Schaltvorrichtung ist in einem Gehäuse 1 derart angeordnet, daß ein Schalthebel 2, an dessen, dem Fahrer zugewandtem Ende ein Schaltknauf 3 angeordnet ist, durch eine Schalthebeldurchführung 4 innerhalb der Gehäuseabdeckung geführt wird.
Eine Schaltachse 5 (Fahrzeugquerrichtung) liegt orthogonal zu einer Wählachse 6 (Fahrzeuglängsrichtung). Um beide Achsen ist der Schalthebel 2 schwenkbar gelagert. Die Wählachse 6 wird dabei durch einen Bolzen 7 gebildet, der seinerseits in dem Gehäuse 1 der Schaltvorrichtung über Lagerbuchsen 8, 9 gelagert ist. Der Bolzen 7 ist einstückig mit einem Kreuzstück 10 verbunden.
Das unterste Ende des Schalthebels 2 ist als ein Stift 11 ausgebildet, der sich an einen zapfenartigen Übergangsbereich 12 des Schalthebels 2 anschließt. Der zapfenartige Übergangsbereich 12 ist in einem Gleitstein 13 zwangsgeführt, dessen Führungskontur 14 dem Schaltbild der Schaltvorrichtung entspricht. Der Stift 11 führt eine Steuerfahne 15. Im unteren Teil des Schalthebels 2 ist an einem durch eine Druckfeder 16 abgestützten Schieber 17 ein erstes federbelastetes Rastmittel 18 angebracht, das während der Schaltbewegung auf einer definiert profilierten Oberfläche 19 eines bügelförmigen Bereiches des Kreuzstückes 10 abrollt oder darauf entlanggleitet. Dieses Rastmittel besteht hier aus je einer federbelasteten Rolle die achsparallel zur höher gelegenen Schaltachse 5 beiderseitig des Schalthebels 2 angebracht sind. Durch dieses erste Rastmittel wird dem Fahrzeugführer das ihm von mechanischen Schaltvorrichtungen vertraute "Schaltgefühl" vermittelt, was durch die Federsteifigkeit der Druckfeder 16 und den Kurvenverlauf der definiert profilierten Oberfläche 19 erreicht wird. Weiterhin hat das Rastmittel die Funktion, den Schalthebel 2 in die Grundposition G zurückzuführen.
Ein zweites Rastmittel, ist zur Simulierung des Wählvorganges (Quertippen) am in Fahrtrichtung gesehen vorderen Teil des bügelförmigen Teils des Kreuzstückes 10 angebracht. Eine Rollenhalterung 20 nimmt dabei eine Rolle 21, sowie eine gegen diese Rolle 21 wirkende Druckfeder 22 auf. Die Rolle 21 ist auf einer definierten Oberfläche 23 einer Bodenplatte 24 des Gehäuses 1 geführt.

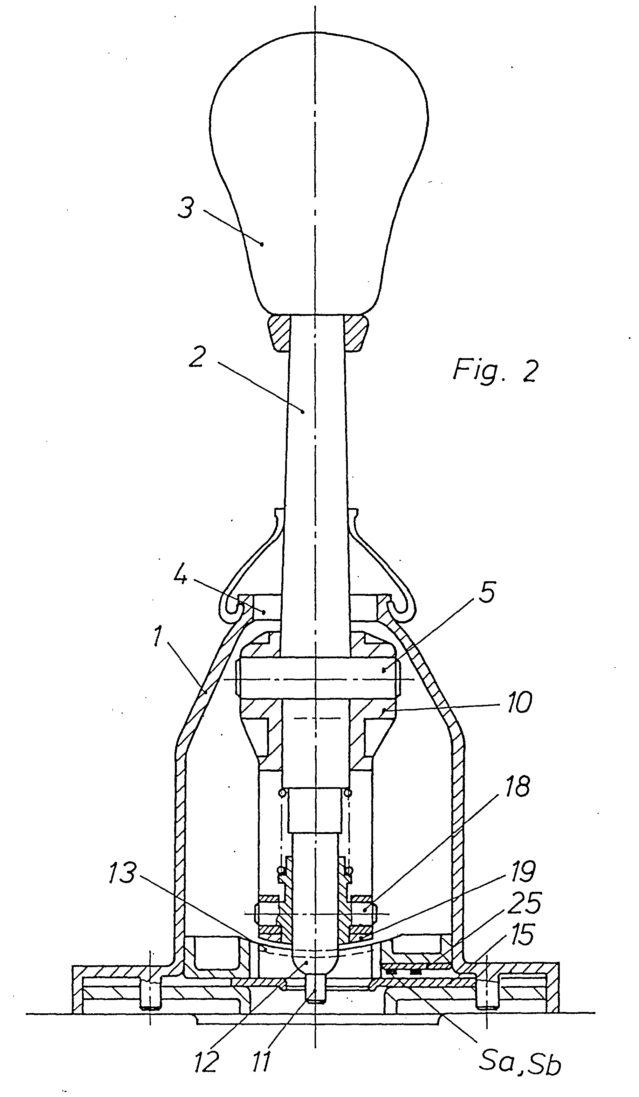

In Figur 2 ist eine Schnittdarstellung einer erfindungsgemäßen Schaltvorrichtung in Fahrzeugquerrichtung gesehen dargestellt.
Ergänzend zu der Beschreibung der Figur 1 ist hier die Lagerung des Schalthebels 2 auf der Schaltachse 5 deutlich erkennbar. Es findet auch als Schaltachse ein einfacher Bolzen Anwendung. Im unteren Bildbereich ist ferner das beidseitig am Schalthebel 2 angebrachte federbelastete Rastmittel 18 gezeigt, das gegen die definiert profilierte Oberfläche 19 des bügelförmigen Bereiches des Kreuzstückes 10 wirkt.
Der unterhalb des im Gleitstein 13 geführten zapfenartigen Übergangsbereiches 12 am Schalthebel 2 angeformte Stift 11 führt dabei die Steuerfahne 15 in den Wirkungsbereich der Sensoren (Sa, Sb, Sc, Sd). Diese Sensoren sind auf einer Leiterplatte 25 montiert. Es sind in der gezeigten Ausführung einer erfindungsgemäßen Schaltvorrichtung optische Sensoren. Sie nehmen die Signale von der Steuerfahne 15 auf und geben sie an ein Steuerungssystem weiter.

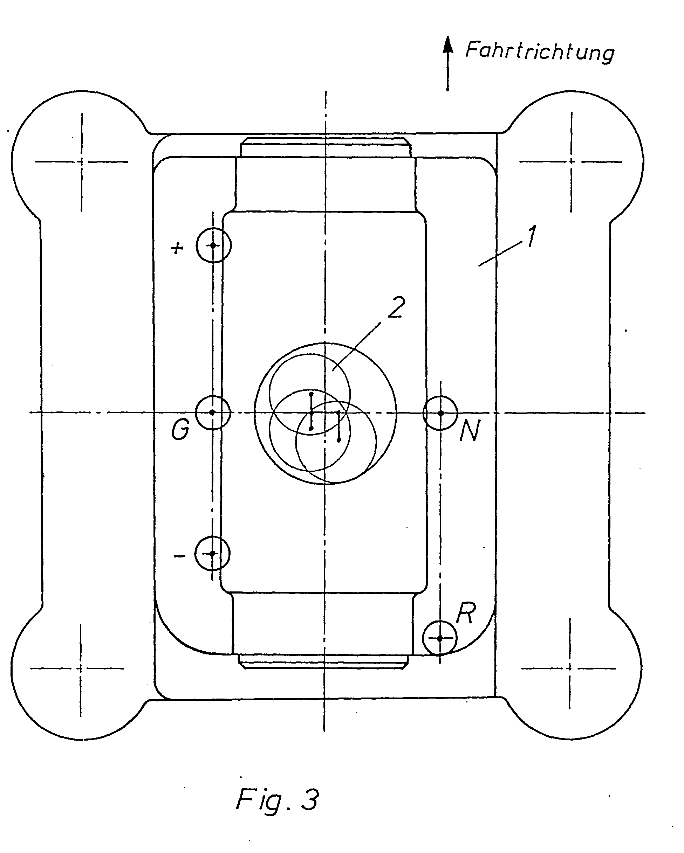

In Figur 3 ist die beispielhafte Darstellung des Schaltschemas einer erfindungsgemäßen Schaltvorrichtung gezeigt. Die Schalthebeldurchführung 4 in der Abdeckung des Gehäuses 1 ist dabei als ein Oval ausgeführt, in der der Schalthebel 2 in Mittenstellung steht. Das Schaltschema weist die Schaltstufen "G", "+", sowie "-" für die Vorwärtsgänge und "N" für die Neutralstellung beziehungsweise "R" für den Rückwärtsgang auf.
Der Schalthebel 2 steht im normalen Fahrbetrieb in der Grundposition "G". Durch Antippen in "+" - oder "-" - Richtung wird der nächsthöhere oder nächstniedere Getriebegang gewählt.
Um den Rückwärtsgang einlegen zu können, muß zunächst eine tippende Wählbewegung in Richtung quer zur Fahrtrichtung vollzogen werden, so daß die Vorwärtsgangstufen ausgeschaltet werden, um anschließend durch ein Antippen des Schalthebels 2 in Richtung "R" den Rückwärtsgang anzuwählen.
In der Stellung R rastet der Schalthebel 2 mit seinem federbelasteten Rastmittel 18 durch die entsprechende Gestaltung der definiert profilierten Oberfläche 19 ein.
Soll der Rückwärtsgang, also die Stellung "R", wieder verlassen werden, so muß manuell am Schalthebel 2 eine Kraft, die wie zuvor beschrieben durch die Gestaltung der definiert profilierten Oberfläche 19 und die Auslegung der Druckfeder 16 bestimmt wird, aufgewendet werden, um den Schalthebel 2 wieder in Position N zu bringen, aus der er selbst wieder in Grundposition G schwenkt.

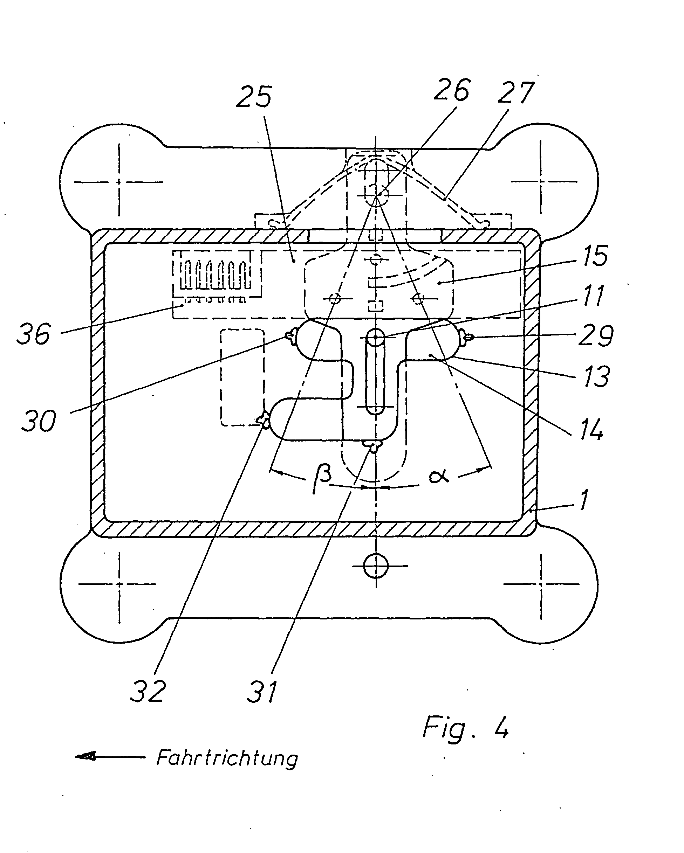

In Figur 4 wird eine erfindungsgemäße Schaltvorrichtung im Schnitt, in Höhe des Gleitsteines 13 mit der darunterliegenden Steuerfahne 15 dargestellt. Der zapfenartige Übergangsbereich 12 des Schalthebels 2 wird in der Führungskontur 14 des Gleitsteines 13 zwangsgeführt.
Die Steuerfahne 15 ist um eine Schwenkachse 26 schwenkbar angeordnet und wird von einer Blattfeder 27 in Ausgangposition gehalten bzw. in diese zurückgeholt. Der Stift 11 des Schalthebels 2 greift in eine Aussparung 28 der Steuerfahne 15 ein. Die Führungskontur 14 des Gleitsteines 13 weist in ihren Endpunkten Dämpfungselemente 29, 30, 31 und 32 auf, die den zapfenartigen Übergangsbereich 12 des Schalthebels 2 beim Schalten in die entsprechenden Richtungen "+", "-", "N" und "R" an den Endpunkten abdämpfen.

Der Schalthebel 2 durchgreift mit seinem Stift 11 die Steuerfahne 15 in deren Aussparung 28.

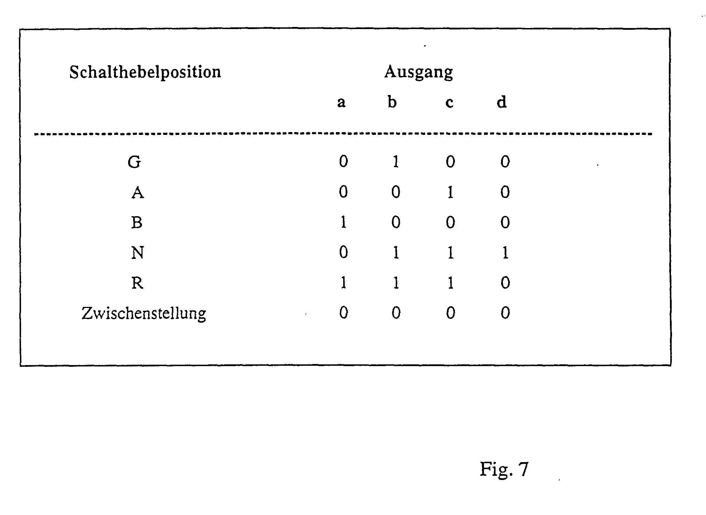

Anhand des in Figur 4 ersichtlichen konstruktiven Zusammenspieles der Steuerfahne 15 und ihrer Reflektionsflächen 33, 34 und 35 und der Sensoren Sa, Sb, Sc und Sd wird nachfolgend der Schaltvorgang ausführlich beschrieben:
In der Grundposition G steht der Schalthebel 2 in Schalthebelposition G. Der Sensor Sb erfaßt das von der Reflektionsfläche 35 reflektierte Signal und bildet über die genannte Binärmatrix (Figur 7) das entsprechende Signal am Ausgang b des Steuerchip. Dieser ist als ein Stecker 36 ausgeführt.
Beim Antippen aus der Grundposition G in Richtung "+" (Plusrichtung = höhere Gangstufe einlegen) schwenkt der Schalthebel 2 um die Schaltachse 5, wird mit seinem zapfenartigen Übergangsbereich 12 in der Führungskontur 14 in Richtung des Dämpfungselementes 29 geführt und verschwenkt mit seinem Stift 11 die Steuerfahne 15 um einen Winkel α. Der Sensor Sc erfaßt das von der Reflektionsfläche 35 reflektierte Signal und bildet über die genannte Binärmatrix das entsprechende Signal an Ausgang c. Daraufhin geht der Schalthebel 2 wieder in die Grundposition G zurück, da im unteren Teil des Schalthebels 2 das, an dem durch die Druckfeder 16 abgestützten Schieber 17, Rastmittel 18 angeordnet ist, das während der Schaltbewegung auf der definiert profilierten Oberfläche 19 gleitet, welche so gestaltet ist, daß das Rastmittel 18 wieder in Grundposition G zurückgleiten muß und so den Schalthebel 2 wieder in die Grundposition G bringt.
Beim Antippen des Schalthebels 2 aus der Grundposition G in Richtung "-" (Minusrichtung = niedrigere Gangstufe einlegen) schwenkt dieser um die Schaltachse 5, wobei diesmal der zapfenartige Übergangsbereich 12 in der Führungskontur 14 in Richtung des Dämpfungselementes 30 geführt wird und die Steuerfahne 15 durch den Stift 11 um einen Winkel β verschwenkt.
Der Sensor Sa erfaßt das von der Reflektionsfläche 35 reflektierte Signal und bildet über die genannte Binärmatrix das entsprechende Signal an Ausgang a. Daraufhin geht der Schalthebel 2 wieder in die Grundposition G zurück.
Beim Antippen des Schalthebels 2 aus der Grundposition G in Richtung der Position N schwenkt dieser um die Wählachse 6 des schwingungsentkoppelt in Lagerbuchsen 8 und 9 gelagerten Bolzens 7. Das Kreuzstück 10 wird bei dieser Bewegung des Schalthebels 2 mitgeschwenkt, da es über die Schaltachse 5 die Verschwenkung des Schalthebels 2 mitmachen muß. Der zapfenartige Übergangsbereich 12 wird in Richtung des Dämpfüngselementes 31 geführt, der Stift 11 nimmt in Aussparung 28 die Steuerfahne 15 mit. Hierbei wird durch eine Ausnehmung 37, in die die Schwenkachse 26 eingreift, die Verschiebung der Steuerfahne 15 in die Richtung gestattet, die zum Dämpfungselement 31 weist. Die Reflektionsflächen 33 und 34 werden zugehörig unter die Sensoren Sd, Sb und Sc geführt. Es werden über die Binärmatrix entsprechende Signale an den Ausgängen b, c und d abgenommen.
Falls der Schalthebel 2 in der Position N wieder losgelassen wird, geht er durch die Ausbildung der definierten Oberfläche 23 wieder in die Grundposition G zurück. Ist es allerdings erwünscht den Rückwärtsgang einzulegen, so muß der Schalthebel 2 gemäß Schaltschema (Figur 3) aus Position N heraus in Richtung R verschwenkt und eine Rückwärtsgangsperre überwunden werden. Diese wird dadurch erreicht, daß die definiert profilierte Oberfläche 19 an der entsprechenden Stelle steiler ansteigt und ein oberer Totpunkt durch das Rastmittel 18 überwunden werden muß.
Der Schalthebel 2 schwenkt dabei um die Schaltachse 5, der zapfenartige Übergangsbereich 12 wird in Richtung des Dämpfungselementes 32 zwangsgeführt und der Stift 11 nimmt die Steuerfahne 15 in deren Aussparung 28 mit. Die Reflektionsfläche 34 wird unter die Sensoren Sa, Sb und Sc geführt. Die von der Reflektionsfläche 34 reflektierten Signal werden von den Sensoren Sa, Sb und Sc aufgenommen, in der gewünschten Codierung über den Steuerchip verarbeitet und entsprechende Signale werden an die Ausgänge a, b und c gegeben.
Befindet sich der Schalthebel 2 in einer Zwischenstellung zwischen den Stellungen "+", "G", "-", "N" und "R", so reflektiert keine der Reflektionsflächen 33, 34 und 35 ein Signal an einen der Sensoren Sa, Sb, Sc, Sd, und es wird kein Signal (im binären Sinne also "0") an einen der Ausgänge a, b, c, d gegeben, auch das bedeutet aber einen bestimmten Zustand der Steuerung bzw. des Getriebes.

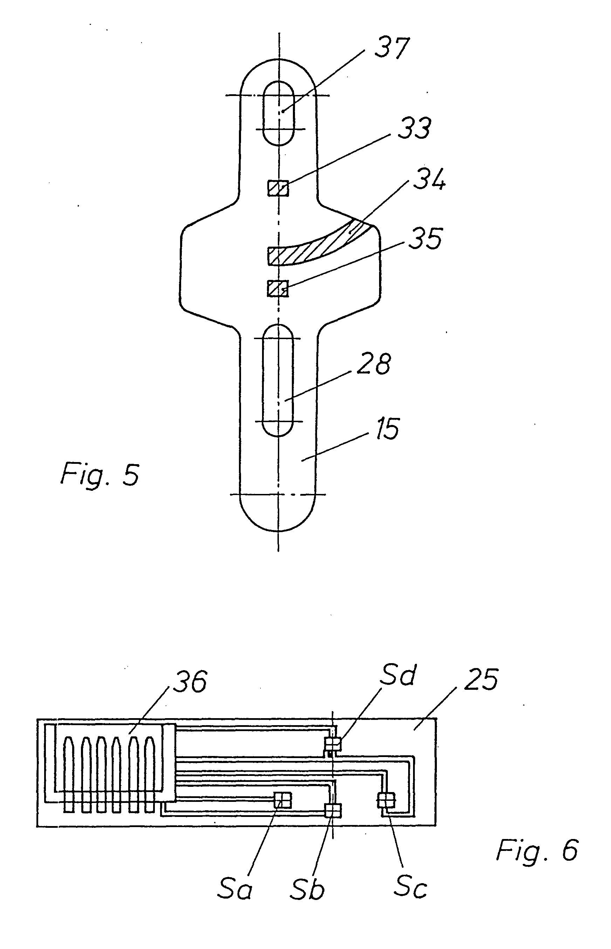

Figur 5 zeigt eine mögliche erfindungsgemäße Ausführung einer Steuerfahne. Im gezeigten Ausführungsbeispiel weist die Steuerfahne 15 Reflektionsflächen 33, 34, und 35 auf. Diese korrespondieren mit den optischen Sensoren Sd, Sa, Sb und Sc.

In Figur 6 ist eine mögliche Ausführung einer erfindungsgemäßen Leiterplatte 25 mit einem Stecker 36 dargestellt. Ein nicht gezeigter Steuerchip nimmt die von den Sensoren erfaßten Meßwerte auf und verarbeitet sie weiter, sodaß eine Steueung des Getriebes möglich ist. Der Steuerchip beinhaltet die zentrale Verarbeitungseinheit (CPU). Die Sensoren Sa, Sb, Sc und Sd sind unterhalb der Leiterplatte 25 installiert (deshalb gestrichelt: gezeichnet).

In Figur 7 ist beispielhaft eine mögliche Binärmatrix dargestellt. Jeder zu realisierenden Schaltstufe entspricht eine durch "0"- und "1"- Signale beschreibbare Binärcodierung.

Grundsätzlich würden drei Sensoren und ein vierpoliger Stecker ausreichen, um bis zu sechs Positionen sensieren zu können. Um aber die Sicherheit gegen Fehlschaltungen zu erhöhen, weist das erläuterte Ausführungsbeispiel vier Sensoren und einen sechspoligen Stecker 36 auf, um die sechs Positionen:
- Grundposition: G
- Hochschalten: +
- Zurückschalten: -
- Neutralposition: N
- Stellung: R (Rückwärtsgang)
und die jeweiligen Zwischenpositionen zweifelsfrei erfassen zu können.

Der Sensor Sd ist zur Erhöhung der Schaltsicherheit zusätzlich eingeführt.

### Bezugszeichenliste

- 1: Gehäuse
- 2: Schalthebel
- 3: Schaltknauf
- 4: Schalthebeldurchführung
- 5: Schaltachse
- 6: Wählachse
- 7: Bolzen
- 8, 9: Lagerbuchse
- 10: Kreuzstück
- 11: Stift
- 12: zapfenartiger Übergangsbereich
- 13: Gleitstein
- 14: Führungskontur
- 15: Steuerfahne
- 16: Druckfeder
- 17: Schieber
- 18: federbelastetes Rastmittel
- 19: definiert profilierte Oberfläche
- 20: Rollenhalterung
- 21: Rolle
- 22: Druckfeder
- 23: definierte Oberfläche
- 24: Bodenplatte
- 25: Leiterplatte
- 26: Schwenkachse
- 27: Blattfeder
- 28: Aussparung
- 29,30,31,32: Dämpfungselemente
- 33, 34, 35: Reflektionsflächen
- 36: Stecker
- 37: Ausnehmung
- Sa, Sb, Sc, Sd: Sensor
- α, β: Winkel

## Patentansprüche

1. Schaltvorrichtung für ein Getriebe von Kraftfahrzeugen zur berührungslosen Erfassung von Schaltsignalen, die den Schaltbewegungen eines Schalthebels (2) entsprechen, wobei der um eine Schaltachse (5) schwenkbare Schalthebel (2) mit einer mit Signalflächen (33, 34, 35) versehenen Steuerfahne (15) gekoppelt ist, wobei die Signalflächen mit Sensoren (Sa, Sb, Sc) korrespondieren, um binärcodierte Signale an eine Steuereinheit des Kraftfahrzeuggetriebes zu übergeben und der Schalthebel (2) unterhalb seiner Schaltachse (5) in einem Gleitstein (13) zwangsgeführt ist.

2. Schaltvorrichtung nach Anspruch 1, **dadurch gekennzeichnet, daß** wenigstens drei Sensoren bis zu sechs Schaltstellungen des Schalthebels (2) sensieren.

3. Schaltvorrichtung nach Anspruch 1 oder 2, **dadurch gekennzeichnet daß** optische Sensoren verwendet werden und die Signalflächen der Steuerfahne (15) Reflektionsflächen (33,34,35) sind.

4. Schaltvorrichtung nach Anspruch 1 oder 2, **dadurch gekennzeichnet daß** Hallsensoren verwendet werden und die Signalflächen der Steuerfahne (15) magnetisierte Bereiche (33,34,35) sind.

5. Schaltvorrichtung nach einem oder mehreren der Ansprüche 1 bis 3, **dadurch gekennzeichnet daß** die Kraftverläufe der Schaltbewegungen in der Schaltung mittels definiert profilierter Oberflächen (19) und Rastmittel (18) erzeugt werden.

## Claims

1. Gearshift apparatus for a transmission of motor vehicles for contactless detection of gearshift signals corresponding to the gearshift movements of a gearshift lever (2), wherein the gearshift lever (2), which is capable of swivelling about a gearshift axis (5), is coupled to a control lug (15) provided with signal surfaces (33, 34, 35), wherein the signal surfaces correspond with sensors (Sa, Sb, Sc) in order to transfer binary coded signals to a control unit of the motor vehicle transmission and the gearshift lever (2) is positively driven underneath its gearshift axis (5) in a slide block (13).

2. Gearshift apparatus according to claim 1, **characterized in that** at least three sensors sense up to six gearshift positions of the gearshift lever (2).

3. Gearshift apparatus according to claim 1 or 2, **characterized in that** optical sensors are used and the signal surfaces of the control lug (15) are reflection surfaces (33, 34, 35).

4. Gearshift apparatus according to claim 1 or 2, **characterized in that** Hall-effect sensors are used and the signal surfaces of the control lug (15) are magnetized regions (33, 34, 35).

5. Gearshift apparatus according to one or more of claims 1 to 3, **characterized in tha**t the power characteristics of the gearshift motions are generated in the gearshift apparatus by means of surfaces (19) profiled in a defined manner and detent means (18).

## Revendications

1. Dispositif de commutation pour une boîte de vitesses de véhicules automobiles pour la détection sans contact de signaux de commutation, qui correspondent aux déplacements de commutation d'un levier de commutation (2), dans lequel le levier de commutation (2) qui peut pivoter autour d'un axe de commutation (5), est accouplé à une languette de commande (15), qui est équipée de surfaces (33, 34, 35) de transmission de signaux, et dans lequel les surfaces de transmission de signaux correspondant à des capteurs (Sa, Sb, Sc) pour la transmission de signaux codés en binaire à l'unité de commande de la boîte de vitesses du véhicule automobile et le levier de commutation (2) est guidé d'une manière forcée dans une coulisse (13) au dessous de son axe de commutation (5).

2. Dispositif de commutation selon la revendication 1, **caractérisé en ce qu**'au moins trois capteurs détectent jusqu'à six positions de commutation du levier de commutation (2).

3. Dispositif de commutation selon la revendication 1 ou 2, **caractérisé en ce qu**'on utilise des capteurs optiques et que les surfaces de transmission de signaux de la languette de commande (15) sont des surfaces réfléchissantes (33, 34, 35).

4. Dispositif de commutation selon la revendication 1 ou 2, **caractérisé en ce qu**'on utilise des capteurs à effet Ha11 et que les surfaces de transmission de signaux de la languette de commande (15) sont des zones magnétiques (33, 34, 35).

5. Dispositif de commutation selon une ou plusieurs des revendications 1 à 3, **caractérisé en ce que** les allures de la force des déplacements de commutation dans le circuit sont produites à l'aide de surfaces (19) profilées de façon définie et de moyens d'encliquetage (18), profilés de façon définie.
